# EUROPEAN PATENT SPECIFICATION

(11) **EP 1 179 800 B1**
(45) Date of publication and mention of the grant of the patent: **18.02.2009**
(21) Application number: 00311442.8
(22) Date of filing: 20.12.2000
(51) Int. Cl.: G06K 1/12

(54) **Identification mark output apparatus**
Vorrichtung zur Ausgabe eines Identifikationskennzeichens
Dispositif de production d'une marque d'identification

(30) Priority: 07.08.2000 JP 2000238037
(43) Date of publication of application: 13.02.2002
(73) Proprietor: FUJI XEROX CO., LTD., Minato-ku, Tokyo, 107-0052 (JP)
(72) Inventor: Ishii, Yoshiko, Kato-gun, Hyogo 673-1447 (JP); Fujii, Naoto, Kato-gun, Hyogo 673-1447 (JP)
(74) Representative: Fenlon, Christine Lesley

(56) References cited:
- EP-A- 0 627 703
- EP-A- 0 847 865
- US-A- 6 056 195

## Description

The present invention relates to an apparatus for printing and/or displaying identification marks such as bar codes. More particularly, the present invention relates to an identification mark output apparatus designed to output a bar code together with a caption (consisting of letters, figures, signs, etc) arranged adjacent to the bar code.

As is known, conventional bar code label printers are designed to print required bar codes in accordance with one of the application standards such as NW-7, JAN, Code 3 of 9, Industrial 2 of 5, Interleaved 2 of 5 and EAN-128. According to these standards except the last one (EAN-128), the characters represented by the bar code are printed in a one-to-one correspondence to the characters represented by the caption accompanying the bar code. Thus, to print a desired identification mark (consisting of a bar code and a caption), the user of the conventional printer is required to enter only the data about the bar code into the host computer, but not the data about the caption. An on-line barcode printer system is known from EP-A-0627703, comprising an identification mark output apparatus for outputting ID marks including a symbol pattern and a caption accompanying the symbol pattern, the apparatus comprising: a data receiver for receiving a piece of mark-specifying information corresponding to the ID mark; and an output device for outputting the selected symbol pattern and the caption. Barcode printer systems are also known from EP-A-0847865 and US-A-6056195. The claims are delimited against document EP-A-0 627 703.

In a label printer operated in accordance with EAN-128, on the other hand, the characters represented by a bar code do not need to be a one-to-one correspondence to the characters represented by the accompanying caption. For instance, the characters of the caption may include separation signs such as "(" and ")", whereas the characters of the bar code do not include these signs.

Previously, to print such a non-one-to-one ID mark, the user of the printer needs to separately enter data about the bar code and data about the caption into the host computer. Based on these pieces of data, the host computer supplies two pieces of control data (i.e., control data for printing the bar code and control data for printing the caption) to the printer.

The printing of the bar code and the caption may be performed based on control codes (bar code printing codes) in a text mode. Disadvantageously, in a text mode, the vertical positional adjustment of a deviated caption can only be performed by the width of one line. Thus, supposing that one line has a width of 7mm for example, the user can print the caption at a position spaced downward from the bar code only by multiples of 7mm (=to the value of 7mm, 14mm, 21mm, etc.) but not by other amounts (6mm, 7.5mm, 8mm, etc.).

It is possible to address this problem by switching between the system modes for printing bar codes and captions. Specifically, a text mode is used to print a bar code, while a graphics mode is used to print a caption since this mode is preferable to finely adjust the position of an object to be printed. In this mode-switching strategy, however, the load on the host computer tends to become unduly heavy, and also a rather large amount of data needs to be dealt with.

Further, using two different modes for specifying the bar code and the caption may cause an error in relatively positioning the bar code and the caption. In addition, when two modes are used, the printer may fail to recognize that the bar code and the accompanying caption belong to the common ID mark. In such an instance, when the user wishes to discontinue the printing of the ID mark upon finding erroneous entry of ID mark specifying data, the user may be able to stop the bar code printing but not the caption printing.

Still further, in accordance with EAN-128, a predetermined number of characters used for bar codes are arranged in a code conversion table known as Code 128 However, Code 128 is not ideally compatible with a 1-byte character code table such as an EBCDIC-code table. Therefore, when a bar code is specified in accordance with the EBCDIC-code table, some characters (special characters) of the bar code may not be printed by a printer provided with Code 128.

Accordingly, it is desirable to provide an ID mark output apparatus designed to print or display an ID mark based on a single piece of ID mark specifying data, wherein the ID mark includes a symbol and a caption in a non-one-to-one correspondence.

According to the present invention, there is provided an identification mark output apparatus for outputting ID marks including a symbol pattern and a caption accompanying the symbol pattern, the apparatus comprising: a data receiver for receiving a piece of mark-specifying information corresponding to the ID mark; and an output device for outputting the selected symbol pattern and the caption; characterised in that the caption includes a separation sign which is excluded from the symbol pattern, and in that the mark-specifying information includes a character code section for the caption that includes character codes based on a predetermined code table; the apparatus being further characterised by conversion table that associates one of the character codes corresponding to the separation sign with a value causing the separation sign to be included in the caption but not in the symbol pattern (A1), and that associates another of the character codes corresponding to a character different from the separation sign with another value causing the different character to be included in both the caption and the symbol pattern; and a code analyzer for performing analysis of contents of the mark-specifying information by referring to the code conversion table; the output device being operable to output the symbol pattern and the caption based on the analysis by the code analyzer.

Reference will now be made, by way of example, to the accompanying drawings, in which:
Fig. 1 is a schematic view showing components of an ID mark output apparatus embodying the present invention;
Fig. 2 illustrates an example of control code including ID mark specifying information;
Fig. 3 illustrates a bar code table provided in the host computer;
Fig. 4 illustrates an example of control code generated in accordance with an EBCDIC-compatible bar code table;
Fig. 5 is a flow chart illustrating how ID mark printing is performed;
Fig. 6 illustrates another example of control code generated in accordance with an EBCDIC-compatible bar code table;
Fig. 7 illustrates an example of ASCII-compatible bar code table; and
Fig. 8 illustrates an example of control code generated in accordance with an ASCII-compatible bar code table.

The preferred embodiments of the present invention will be described below with reference to the accompanying drawings.

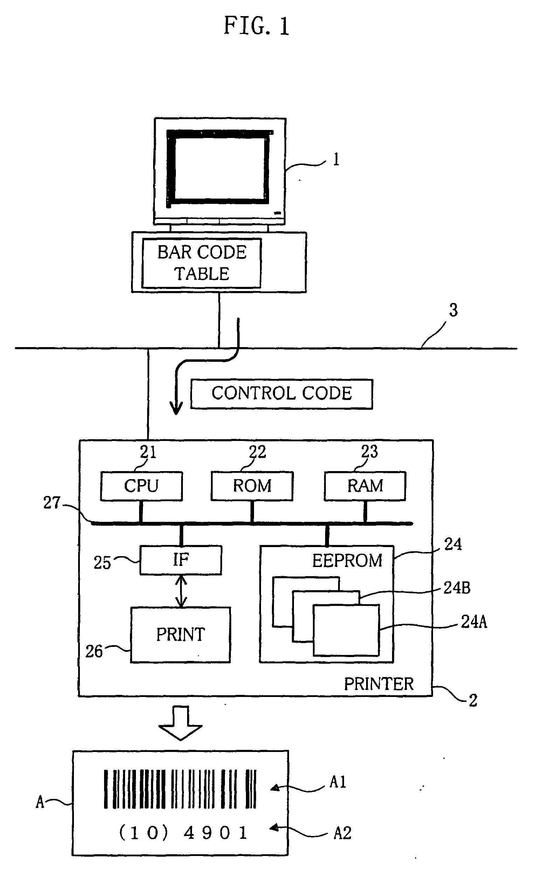

Reference is first made to Fig. 1 schematically showing the components of an identification mark output system embodying the present invention. As illustrated, the output system includes a computer 1, a printer 2 and a LAN (local area network) 3 connecting the computer 1 to the printer 2. With the use of the ID mark output system, an item identification mark A may be printed on a recording medium and/or displayed on the monitor of the computer 1. The computer 1 may be a personal computer, a work station or a main frame.

The illustrated ID mark A includes a bar code A1 and a caption A2 printed under the bar code A1. The illustrated caption A2 includes several figures and a pair of parentheses, though the present invention is not limited to this. The caption A2 may include other kinds of signs, letters, etc.

When operated by a user desiring to print the ID mark A, the computer 1 supplies printing data to the printer 2. The printing data may include ID mark specifying data or control code. This ID mark specifying data is generated in accordance with a bar code table stored in the memory (e.g. hard disk) of the computer 1.

The printer 2, which may be an inkjet printer or laser printer designed to print ID marks on recording media, includes a CPU (central processing unit) 21, a ROM (read-only memory) 22, a RAM (random-access memory) 23, an EEPROM (electrically erasable programmable ROM) 24, an IF (interface) 25, and a printing unit 26. The CPU 21, ROM 22, RAM 23, EEPROM 24 and the IF 25 are connected to each other via bus lines 27 consisting of a data bus, an address bus and a control bus. The LAN 3 is connected to the IF 25.

The CPU 21 controls all the other parts of the printer 2. The ROM 22 stores programs to be executed by the CPU 21. The RAM 23 provides data storage work areas for the CPU 21. The EEPROM 24 stores a plurality of code conversion tables including the illustrated tables 24A and 24B.

The ID mark A is formed in accordance with EAN-128 for example. According to EAN-128, the characters of the bar code A1 and the characters of the caption A2 are not necessarily arranged in a one-to-one correspondence. Specifically, the illustrated bar code A1 does not include characters corresponding to the parentheses "(" and ")" present in the caption A2, though the bar code A1 includes the characters corresponding to the figures "1, 0, 4, 9, 0 and 1" of the caption A2.

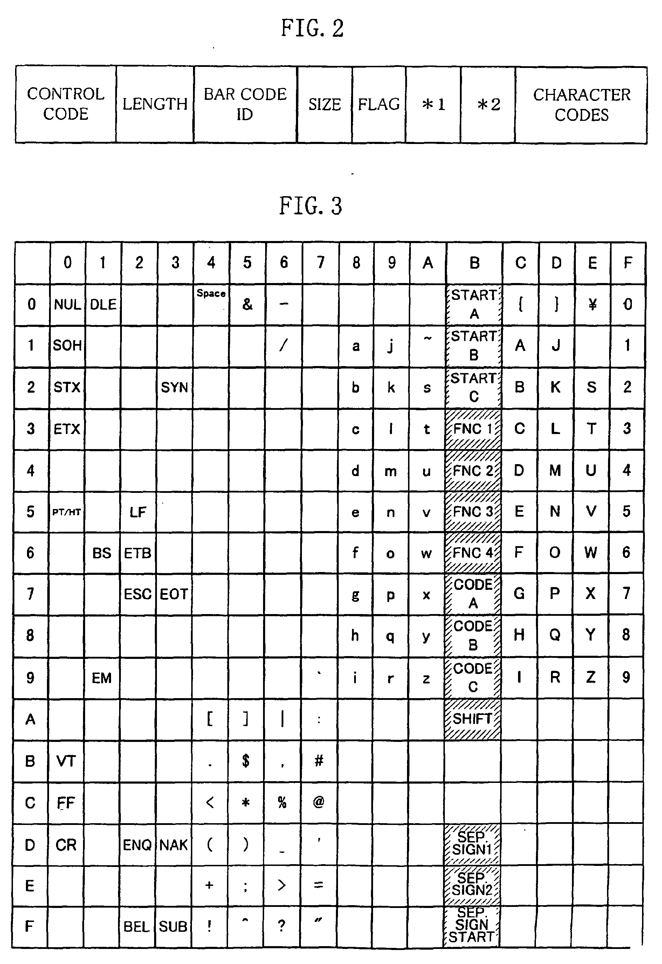

Fig. 2 shows an example of a control code (ID mark specifying data) formed in accordance with an embodiment of the present invention. The illustrated control code includes various pieces of data representing the identification of the control code, the length of the control code, the identification of the mark A, the size of the region for printing the mark A. The control code also includes a flag and character codes.

The control code ID data shows that the supplied control code is the one for performing ID mark printing. The control code length data shows the data length of the control code. The mark ID data shows what standard the ID mark A complies with. The print region size data shows the size of the rectangular region in which the ID mark is to be printed. The flag serves as control information when the ID mark is printed. The character codes are formed in accordance with an EBCDIC code table.

The control code shown in Fig. 2 includes separation sign-specifying sections indicated by "?1" and "?2", which are not present in conventional control codes. The technical significance of this novel feature will be described later.

Fig. 3 shows an example of a bar code table stored in the hard disk of the computer 1. The illustrated table is basically the same as a conventional EBCDIC code table except for the following differences.

Specifically, the bar code table of Fig. 3 contains a number of special characters which are not present in a conventional EBCDIC code table. The special characters are "START * (B0-B2)", "FNC * (B3-B6)", "CODE * (B7-B9)" and "SHIFT(BA)". The illustrated bar code table also includes sections "BD", "BE" and "BF" provided for designating "SEPARATION SIGN 1", "SEPARATION SIGN 2" AND "SEPARATION SIGN START", respectively. It should be noted here that the above-mentioned sections (i.e., B0-BA and BD-BF) are not used in conventional EBCDIC code tables.

Upon receiving a print command from the user wishing to print the ID mark A (Fig. 1), the non-illustrated CPU of the computer 1 refers to the EBCDIC-compatible bar code table of Fig. 3 to generates a single control code for the ID mark A.

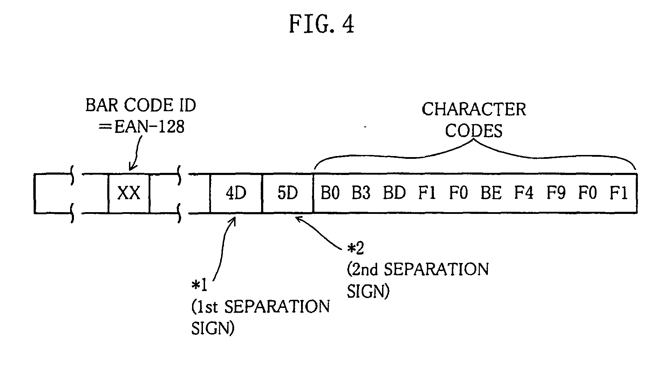

Fig. 4 shows an example of a control code generated in accordance with the EBCDIC-compatible bar code table of Fig. 3. The illustrated control code is the one provided for printing the ID mark A shown in Fig. 1. In the ID mark A, the caption A2 consists of a series of numbers (1, 0, 4, 9, 0 and 1 in this order) and parentheses (separation signs) enclosing the first two digits (1 and 0).

In the control code shown in Fig. 4, codes "4D" and "5D" are placed, respectively, in the *1 section for the first separation sign and in the * 2 section for the second separation sign. As seen from the bar code table of Fig. 3, the code "4D" represents the sign "(" in hexadecimal notation, while the code "5D" represents the sign ")" in hexadecimal notation.

The control code of Fig. 4 also includes a character code section following the * 2 section. The character code section includes a number of character codes (in hexadecimal notation) based on the bar code table of Fig. 3.

As shown in Fig. 4, the character code section contains ten codes, namely, B0, B3, BD, F1, F0, BE, F4, F9, F0 and F1. Of these, the first and second codes correspond to "START A" and "FNC 1", respectively, as shown in the bar code table of Fig. 3.

The third code "BD" means that the separation sign "4D" in the * 1 section is to be printed in the ID mark A. It should be noted here that, at this stage, it has not been determined yet whether the separation sign 4D is to be included only in the caption A2 or in the bar code A1 or in both. As will be described below, this determination is made when the given control code is subjected to the conversion based on the code conversion table 24A.

The fourth and the fifth codes "F1" and "F0" correspond to the first and the second digits ("1" and "0") in the caption A2, respectively. In the illustrated example, these two numbers will be included both in the bar code A1 and the caption A2.

The sixth code "BE" means that the separation sign "5D" in the * 2 section is to be printed in the ID mark A. As with the first separation sign "4D", at this stage, it has not been determined yet whether the separation sign 5D is to be included only in the caption A2 or in the bar code A1 or in both.

The seventh to the tenth codes "F4", "F9", "F0" and "F1" correspond to the third to the sixth digits ( "4", "9", "0" and "1") in the caption A2. As with the first and the second digits, these four numbers will also be included in both the bar code A1 and the caption A2.

The above-mentioned control code, generated by the computer 1, is sent to the printer 2 via the LAN 3, and received by the CPU 21 of the printer. Upon receiving the control code, the CPU 21 reads out the data contained in the control code, and analyzes the contents of the control code by referring to the code conversion table 24A. The conversion table 24A, which is stored in the EEPROM 24 of the printer 2, is arranged in accordance with the EBCDIC-compatible bar code table stored in the computer 1.

The code conversion table 24A, which is also EBCDIC-compatible, may be arranged to associate the character codes of the control code with predetermined codes or values such as "FF", "FB", "FC", "FD" and others. Specifically, according to the preferred embodiment, the third character code "BD" in the control code of Fig. 4 is associated with the code "FB" which means that the character designated as the first separation sign (*1) is to be printed only in the caption A2 but not in the bar code A1. Likewise, the sixth character code "BE" in the control code of Fig. 4 is associated with the code "FC" which means that the second separation sign (*2) is to be printed only in the caption A2 but not in the bar code A1.

The character codes "F1", "F0", "F4", "F9", "F0" and "F1" in the control code of Fig. 4 are associated with appropriate "pattern address" codes by the conversion table 24A. In this case, as opposed to the separations signs "(" and ")", the characters representing the numbers "1", "0", "4", "9", "0" and "1" are included in both the bar code A1 and the caption A2. The printing position of the bar code A1 relative to the caption A2 is determined by the pattern address.

If the control code of Fig. 4 contains an undefined character code, this code is associated with the code "FF" by the conversion table 24A. In this case, the particular character will not be symbolized in any one of the bar code and the caption.

If the control code of Fig. 4 contains the character code "BF", this code is associated with the code "FD" by the conversion table 24A. This code "FD" means that a subsequent character code disposed immediately after the character code "BF" in the control code is to be printed only in the caption but not in the bar code. For instance, if the control code of Fig. 4 includes, among others, two juxtaposed character codes "BF" and "4A", the square bracket "[" represented by the code "4A" will be printed in the caption but not in the bar code.

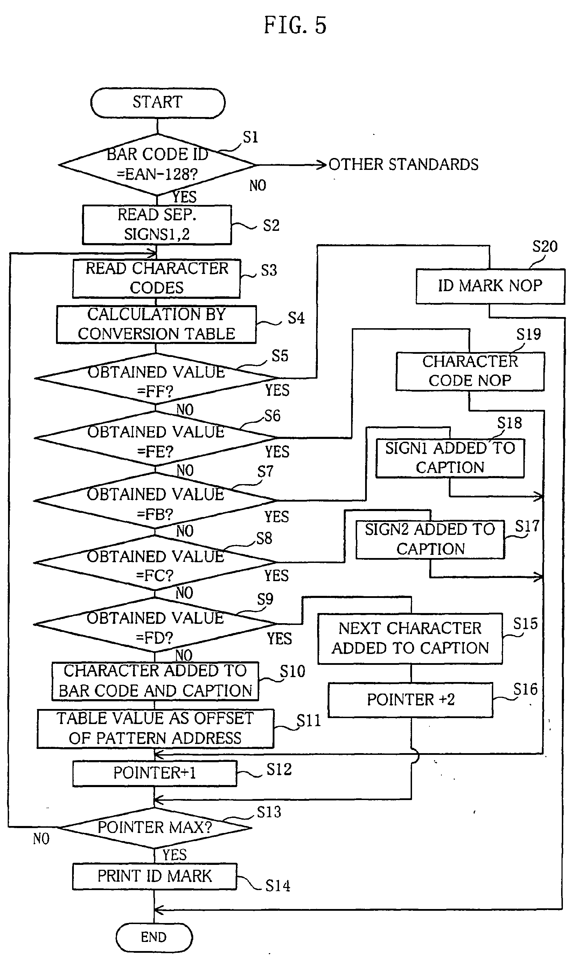

Referring now to Fig. 5, the bar code printing operation of the printer 2 will be described.

First, upon receiving a control code from the computer 1, the CPU 21 of the printer 2 determines whether or not the bar code ID contained in the control code shows that the control code is generated in accordance with EAN-128 (S1).

When the control code is based on EAN-128 (S1:YES), the CPU 21 reads out the first and second separation signs from the control code (S2). These read-out separation signs are stored in the RAM 23.

Then, the CPU 21 reads out the character codes from the control code (S3). As doing this, the CPU 21 counts the number of the character codes and causes the result to be stored in the RAM 23. The stored number is used as a total code number pointer to determine whether or not all of the character codes has been properly processed (see S13).

Then, the CPU 21 refers to the code conversion table 24A, to find a corresponding value of each character code (S4).

Specifically, the CPU 21 determines whether or not the obtained value is "FF" (S5).

When the value is not "FF" (55:NO), the CPU 21 determines whether or not the value is "FE" (S6).

When the value is not "FE" (56:NO), the CPU 21 determines whether or not the value is "FB" (S7).

When the value is not "FB" (S7:NO), the CPU 21 determines whether or not the value is "FC" (S8).

When the value is not "FC" (S8:NO), the CPU 21 determines whether or not the value is "FD" (S9).

When the value is not "FD" (S9:NO), the CPU 21 causes the character to be included in both the bar code A1 and the caption A2 (S10). Based on the pattern address obtained from the conversion table 24A, the CPU 21 determines the amount of offset between the bar code A1 and the caption A2 (S11).

Then, the CPU 21 adds one to the processed-code pointer (S12), while also determining whether or not the processed-code pointer is equal to the total code number pointer (S13).

When the processed-code pointer becomes equal to the total code number pointer, the printing of the bar code A1 and the caption A2 is started under the control of the CPU 21 (S14). Thereafter, when this printing operation is completed, the routine shown in Fig. 5 comes to an end.

Turning back to Step 13, when the processed-code pointer shows a number smaller than the total code number pointer (S13:NO), the routine goes back to Step 3 to process the remaining character codes.

At Step 9, when the obtained value of the currently handling character code is "FD" (S9:YES), the CPU 21 reads out the next character code and causes a character signified by this code to be included in the caption A2 but not in the bar code A1 (S15). In this case, two character codes have been processed, whereby the CPU 21 adds two to the processed-code pointer (S16). Thereafter, Step 13 is performed.

At Step 8, when the obtained value of the currently handling character code is "FC" (S8:YES), the CPU 21 causes the second separation sign in the control code to be included in the caption A2 but not in the bar code A1 (S17). Thereafter, Step 12 is performed.

At Step 7, when the obtained value of the currently handling character code is "FB" (S7:YES), the CPU 21 causes the first separation sign in the control code to be included in the caption A2 but not in the bar code A1 (S18). Thereafter, Step 12 is performed.

At Step 6, when the obtained value of the currently handling character code is "FE" (S6:YES), the CPU 21 subjects the currently handling character code to a non-operation process (S19). Thereafter, Step 12 is performed.

At Step 5, when the obtained value of the currently handling character code is "FF" (S5:YES), the CPU 21 subjects the entire ID mark printing procedure to a non-operation process (S20). Thereafter, the routine comes to an end.

At Step 1, when the bar code ID is not an EAN-128-based one (S1:NO), the CPU 21 will perform ID mark printing in accordance with the specified different standard.

With the above-described arrangement, it is possible to cause special characters (such as "START A (code B0)" or "FNC 1 (code B3)") to be printed in the bar code A1, based on the bar code pattern addresses obtained from the code conversion table 24A.

Further, according to an embodiment of the present invention, use is made of only a single control code for printing a bar code and a caption in a non-one-to-one correspondence. Thus, it is possible to overcome the conventional problems stemming from the use of two separate control codes for a bar code and a caption in a non-one-to-one correspondence.

According to an embodiment of the present invention, the printing position of the caption A2 may be changed in accordance with the length of the parallel lines of the bar codes. The length of these bar code lines may be determined by the size of the rectangular printing region which is specified by the control code. Thus, once the length of the bar code lines is determined, the printing position of the accompanying caption may be determined so that the caption is spaced downward from the bar code by a predetermined distance to avoid overlap.

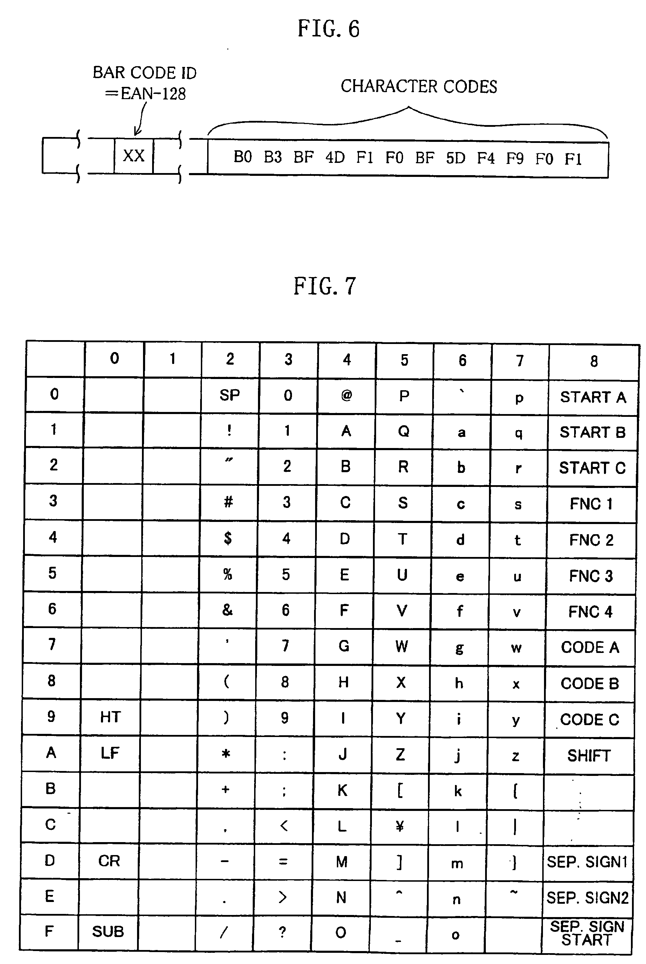

Reference is now made to Fig. 6 showing a control code according to a second embodiment of the present invention. The illustrated code is generated based on an EBCDIC-compatible bar code table. In this embodiment, differing from the first embodiment described above, separation signs ("4D" and "5D") are included in the character code section. In addition, a "BF" code is placed immediately before the separation sign codes "4D" and "5D" to show that the next code (i.e., the "4D" and "5D") is a separation sign code.

When the CPU 21 of the printer 2 detects the "BF" code in the control code, it refers to the code conversion table 24A to find the value corresponding to the code "BF" (S4 in Fig. 5). In the illustrated embodiment, the value corresponding to the code "BF" is "FD". Thus, at Step 9, the CPU 21 causes the routine to go to Step 15. Consequently, the separation signs "(" [code 4D] and ")[code 5D] are to be included only in the caption A2 but not in the bar code A1.

According to an embodiment of the present invention, the separation signs can be printed not only in the caption A2 but also in the bar code A1. To this end, in the first example shown in Fig. 4, these codes "4D" and "5D" may be simply put at appropriate positions in the character code section. In the second example shown in Fig. 6, the codes "4D" and "5D" need to be contained in the character section but should not be preceded by the code "BF".

Reference is now made to Fig. 7 showing an ASCII-compatible bar code table in accordance with which the computer 1 generates required bar code data. As seen from Fig. 7, this bar code table is provided with several characters which cannot be specified in the conventional ASCII code table. These special characters are arranged in unused areas of the conventional ASCII code table.

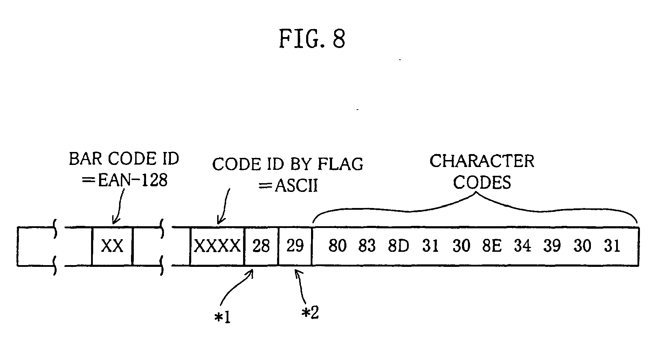

Fig. 8 shows a control code generated in accordance with the ASCII-compatible bar code table of Fig. 7 In the illustrated example, the first separation sign ("28") and the second separation sign ("29") are put in the ?1 section and the ?2 section, respectively, so that these two signs will be printed in the caption but not in the bar code. Following the first and second separation signs, character codes are arranged. Among the character codes are included two codes "8D" and "8E" for specifying the separation signs placed in the ?1 and the ?2 sections, respectively. In addition to the character codes, the control code of Fig. 8 includes a flag for indicating that this control code is an ASCII-compatible code.

The CPU 21 of the printer 2 will deal with the ASCII-compatible control code of Fig. 8 in the same manner as with the EBCDIC-compatible control code of Fig. 4. To properly handle the ASCII-compatible control code, however, the CPU 21 first refers to the flag of the control code, to determine what code system the supplied control code is based on. Then, the CPU 21 switches to the ASCII-compatible code conversion table 24B from the EBCDIC-compatible code conversion table 24A. Thereafter, the control code of Fig. 8 is processed based on the conversion table 24B. The function of the conversion table 24B is substantially similar to that of the EBCDIC-compatible code conversion table 24A.

As described above, the printer 2 of an embodiment of the present invention is provided with a plurality of code conversion tables compatible with different code standards. Thus, when two or more different types of control codes are supplied to the printer 2 from more than one computer, the printer 2 can properly process each control code in accordance with a selected one of the different code conversion tables.

According to an embodiment of the present invention described above, only one control code is needed to print a bar code and an accompanying caption in a non-one-to-one correspondence. In addition, the host computer does not need to switch between the text mode to print the bar code and the graphics mode to print the caption. Thus, it is possible to substantially reduce the load on the host computer and the amount of data to be dealt with for specifying the ID mark.

According to the illustrated embodiments, the ID mark A (Fig. 1) includes a bar code A1, though the present invention is not limited to this. For instance, the bar code A1 may be replaced by a matrix-like symbol pattern.

Instead of the LAN 3, use may be made of a printer cable for connecting the computer 1 to the printer 2. Further, the computer 1 may be omitted, when the printer 2 is provided with equivalent functions necessary to input and process data about the ID mark to be printed.

## Claims

1. An identification mark output apparatus for outputting ID marks (A) including a symbol pattern (A1) and a caption (A2) accompanying the symbol pattern (A1), the apparatus comprising:
a data receiver (21) for receiving a piece of mark-specifying information corresponding to the ID mark (A); and
an output device (1, 2) for outputting the selected symbol pattern (A1) and the caption (A2);
**characterised in that** the caption (A2) includes a separation sign which is excluded from the symbol pattern (A1), and **in that** the mark-specifying information includes a character code section for the caption (A2) that includes character codes based on a predetermined code table;
the apparatus being further **characterised by**:
a code conversion table (24A) that associates one of the character codes corresponding to the separation sign with a value causing the separation sign to be included in the caption (A2) but not in the symbol pattern (A1)and that associates another of the character codes corresponding to a character different from the separation sign with another value causing the different character to be included in both the caption (A2) and the symbol pattern (A1); and
a code analyzer (21) for performing analysis of contents of the mark-specifying information by referring to the code conversion table (24A);
the output device (1, 2) being operable to output the symbol pattern (A1) and the caption (A2) based on the analysis by the code analyzer (21).

2. The apparatus according to claim 1, wherein the mark-specifying information comprises a section for specifying the separation sign, and wherein the character code section of the mark-specifying information is provided, at a selected position, with a code for indicating insertion of the specified separation sign.

3. The apparatus according to claim 1, wherein the character code section of the mark-specifying information includes a separation sign preceding code for indicating that the next code is a code for the separation sign.

4. The apparatus according to any one of claims 1 to 3, wherein the mark-specifying information includes a code ID for identifying the predetermined code table, and wherein the code conversion table (24A) is one selected from a plurality of different code conversion tables with reference to the code ID.

5. The apparatus according to any one of claims 1-4, wherein the symbol pattern (A1) comprises a bar code.

## Patentansprüche

1. Identifikationsmarkenausgabevorrichtung zum Ausgeben von ID-Marken (A), die ein Symbolmuster (A1) und eine Kennung (A2) enthalten, die mit dem Symbolmuster (A1) einhergeht, welche Vorrichtung umfasst:
einen Datenempfänger (21) zum Empfangen einer markenspezifizierenden Information, die der ID-Marke (A) entspricht; und
eine Ausgabeanordnung (1, 2) zum Ausgeben des ausgewählten Symbolmusters (A1) und der Kennung (A2);
**dadurch gekennzeichnet, dass** die Kennung (A2) ein Trennungssignum enthält, das von dem Symbolmuster (A1) ausgeschlosses ist, und dass die markenspezifizierende Information eine Zeichencodesektion für die Kennung (A2) enthält, die Zeichencodes enthält, die auf einer vorbestimmten Codetabelle basieren;
welche Vorrichtung ferner **gekennzeichnet ist durch**:
eine Codekonvertierungstabelle (24A), die einem der Zeichencodes, der dem Trennungssignum entspricht, einen Wert zuordnet, der bewirkt, dass das Trcnnungssignum in die Kennung (A2), aber nicht in das Symbolmuster (A1) aufgenommen wird, und die einem anderen der Zeichencodes, der einem Zeichen entspricht, dass sich von dem Trennungssignum unterscheidet, einen anderen Wert zuordnet, der bewirkt, das das verschiedene Zeichen sowohl in die Kennung (A2) als auch in das Symbolmuster (A1) aufgenommen wird; und
einen Codeanalysator (21) zum Ausführen einer Analyse des Inhaltes der markenspezifizierenden Information unter Bezugnahme auf die Codekonvertierungstabelle (24A);
wobei die Ausgabeanordnung (1, 2) betriebsfähig ist, um das Symbolmuster (A1) und die Kennung (A2) basierend auf der Analyse **durch** den Codeanalysator (21) auszugeben.

2. Vorrichtung nach Anspruch 1, bei der die markenspezifizierende Information eine Sektion zum Spezifieren des Trennungssignums umfasst und bei der die Zeichencodesektion der markenspezifizierenden Information an einer ausgewählten Position mit einem Code zum Angeben des Einfügens des spezifizierten Trennungssignums versehen ist.

3. Vorrichtung nach Anspruch 1, bei der die Zeichencodesektion der markenspezifizierenden Information einen dem Trennungssignum vorausgehenden Code zum Angeben dessen enthält, dass der nächste Code ein Code für das Trennungssignum ist.

4. vorrichtung nach einem der Ansprüche 1 bis 3, bei der die markenspezifizierende Information eine Code-ID zum Identifizieren der vorbestimmten Codelabelle enthält und bei der die Codekonvertierungstabelle (24A) eine solche ist, die aus einer Vielzahl von verschiedenen Codekonvertierungstabelle unter Bezugnahme auf die Code-ID ausgewählt ist.

5. Vorrichtung nach einem der Ansprüche 1 bis 4, bei der das Symbolmuster (A1) einen Strichcode umfasst.

## Revendications

1. Dispositif de sortie de marque d'identification pour délivrer des marques d'identification (A) comprenant un motif de symbole (A1) et une légende (A2) associée au motif de symbole (A1), le dispositif comprenant :
un récepteur de données (21) pour recevoir un élément d'informations de spécification de marque correspondant à la marque d'identification (A) ; et
un dispositif de sortie (1, 2) pour délivrer le motif de symbole sélectionné (A1) et la légende (A2) ;
**caractérisé en ce que** la légende (A2) comprend un signe de séparation qui est exclu du motif de symbole (A1), et **en ce que** les informations de spécification de marque comprennent une section de codes de caractères pour la légende (A2) qui comprend des codes de caractères basés sur une table de codes prédéterminée ;
le dispositif étant en outre **caractérisé par** :
une table de conversion de code (24A) qui associe l'un des codes de caractères correspondant au signe de séparation à une valeur provoquant l'introduction du signe de séparation dans la légende (A2) mais pas dans le motif de symbole (A1), et qui associe un autre des codes de caractères correspondant à un caractère différent du signe de séparation à une autre valeur provoquant l'introduction du caractère différent à la fois dans la légende (A2) et dans le motif de symbole (A1) ; et
un analyseur de code (21) pour effectuer une analyse du contenu des informations de spécification de marque en se référant à la table de conversion de code (24A) ;
le dispositif de sortie (1, 2) pouvant être utilisé pour délivrer le motif de symbole (A1) et la légende (A2) sur la base de l'analyse effectuée par l'analyseur de code (21).

2. Dispositif selon la revendication 1, dans lequel les informations de spécification de marque comprennent une section pour spécifier le signe de séparation, et dans lequel la section de codes de caractères des informations de spécification de marque est pourvue, à une position sélectionnée, d'un code pour indiquer l'insertion du signe de séparation spécifié.

3. Dispositif selon la revendication 1, dans lequel la section de codes de caractères des informations de spécification de marque comprend un code précédant le signe de séparation pour indiquer que le code suivant est un code pour le signe de séparation.

4. Dispositif selon l'une quelconque des revendications 1 à 3, dans lequel les informations de spécification de marque comprennent une identification de code pour identifier la table de codes prédéterminée, et dans lequel la table de conversion de code (24A) est une table sélectionnée parmi une pluralité de tables de conversion de code différentes avec référence à l'identification de code.

5. Dispositif selon l'une quelconque des revendications 1 à 4, dans lequel le motif de symbole (A1) comprend un code à barres.
